# EUROPEAN PATENT APPLICATION

(11) **EP 3 742 027 A1**
(43) Date of publication of application: **25.11.2020**
(21) Application number: 19738732.7
(22) Date of filing: 08.01.2019
(51) Int. Cl.: F16J 15/34, F16J 15/10

(54) **SEAL STRUCTURE AND SEAL TO BE USED IN SAME**

(30) Priority: 15.01.2018 JP 2018004207
(71) Applicant: NOK Corporation, Tokyo 105-8585 (JP)
(72) Inventor: HAYASHI, Eizo, Aso-shi, Kumamoto 869-2231 (JP)
(74) Representative: Global IP Europe Patentanwaltskanzlei
(86) International application number: PCT/JP2019/000227
(87) International publication number: WO 2019/139002

(57) **Abstract**

To improve the heat resistance and the gas barrier function of a seal structure without inviting an increase in size of a compressor.

A seal (101) has a ring-like shape and configured to seal off internal space under a pressure of carbon dioxide gas from external space. The seal (101) is a single structure being a combination of a first material and a second material. The first material is superior in heat resistance to the second material. The second material is superior in gas barrier function to the first material.

## Description

### FIELD

The present invention relates to a seal structure used in sealing in carbon dioxide (CO₂), and a seal for the seal structure.

### BACKGROUND

Recent years have seen widespread use of carbon dioxide as the refrigerant for an air conditioner in consideration of preserving the ozone layer. The air conditioner of this type employs a compressor such as disclosed in Japanese Patent Application Publication No. 2001-004034 (hereinafter referred to as "Patent Literature 1").

In the compressor of this type, the pressure difference between the internal space and the external space is great. Patent Literature 1 discloses that, in a compressor which uses CFC R134a as the refrigerant, the intake pressure falls within a range of about 0.1 MPa to 0.3 MPa inclusive and the discharge pressure falls within a range of about 1 MPa to 3 MPa inclusive under normal operational conditions, and that use of carbon dioxide as the refrigerant raises both of the pressures to fall within ranges of 3 MPa to 4 MPa inclusive and 7 to 13MPa inclusive, respectively (see paragraph [0004]).

Accordingly, the compressor which uses carbon dioxide as the refrigerant must include a seal structure which exhibits high gas barrier function for sealing off the internal space containing carbon dioxide from the external space. To this end, what is widely used is a mechanical seal such as that disclosed in Patent Literature 1.

### BRIEF SUMMARY

### TECHNICAL PROBLEM

In a compressor used in an air conditioner for a vehicle such as a vehicle air conditioner, the rotation speed of the rotating shaft varies in accordance with the throttle position of the engine. The rotation speed of the rotating shaft becomes maximum at wide open throttle. At this time, heat generated by the sliding rotating shaft raises the internal temperature of the compressor to a maximum of about 210°C. Therefore, the sealing member in the seal structure of the compressor must be excellent in heat resistance. Generally, fluoroelastomer (FKM) is employed as the material which satisfies this condition.

On the other hand, fluoroelastomer is inferior in gas barrier function to hydrogenated nitrile butadiene rubber (HNBR) which is widely used as the sealing member. That is, in a compressor which requires high gas barrier function, such as a compressor using carbon dioxide as the refrigerant gas, the sealing member formed of fluoroelastomer may let the refrigerant gas to permeate.

Accordingly, the sealing member for a compressor used in a vehicle air conditioner which uses carbon dioxide as the refrigerant gas must exhibit both the two functions, namely, the heat resistance and the gas barrier function.

Here, neither hydrogenated nitrile butadiene rubber with excellent gas barrier function nor fluoroelastomer with excellent heat resistance can exhibit both the two functions of heat resistance and gas barrier function on its own.

When a single seal structure includes both a seal formed of fluoroelastomer with excellent heat resistance and a seal formed of hydrogenated nitrile butadiene rubber with excellent gas barrier function, the size of the compressor is sacrificed for the mount space for the seals.

An object of the present invention is to improve the heat resistance and the gas barrier function of a seal structure without inviting an increase in size of a compressor.

### SOLUTION TO PROBLEM

A first aspect of the present invention is a seal having a ring-like shape and configured to seal off internal space under a pressure of carbon dioxide gas from external space. The seal is a single structure being a combination of a first material and a second material. The first material is superior in heat resistance to the second material. The second material is superior in gas barrier function to the first material.

A second aspect of the present invention is a seal structure used in a compressor including a rotating shaft, including: a housing; a mating ring fixed to the housing; a seal ring abutting on the mating ring; and the seal disposed between the housing and the mating ring or between the seal ring and the rotating shaft.

### ADVANTAGEOUS EFFECTS

The present invention improves the heat resistance and the gas barrier function of a seal structure without inviting an increase in size of a compressor.

### BRIEF DESCRIPTION OF DRAWINGS

FIG. 1 is a vertical-sectional side view of a mechanical seal for a compressor according to an embodiment.
FIG. 2 is a schematic illustration of a shaft packing according to a first embodiment.
FIG. 3 is a schematic illustration of a shaft packing according to a second embodiment.
FIG. 4 is a schematic illustration of a shaft packing according to a third embodiment.
FIG. 5 is a schematic illustration of a shaft packing according to a fourth embodiment.
FIG. 6 is a schematic illustration of a shaft packing according to a fifth embodiment.

### DETAILED DESCRIPTION

### First Embodiment

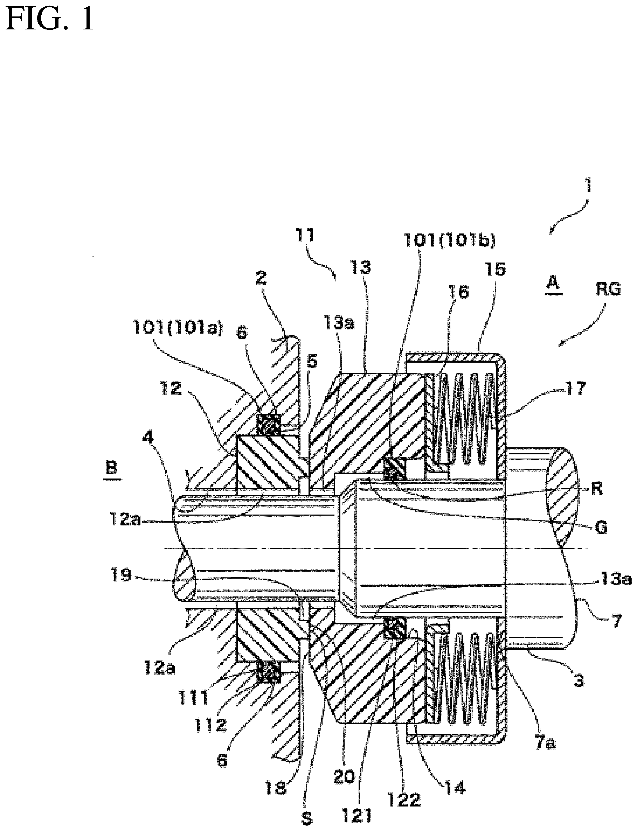

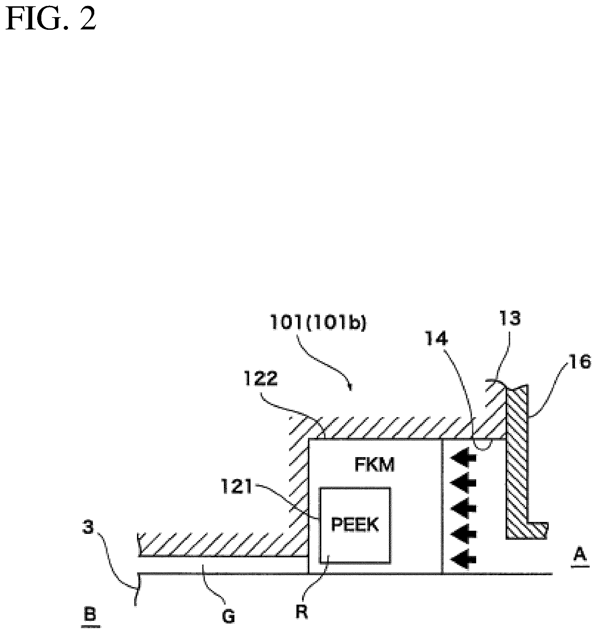

With reference to FIGS. 1 and 2, a description will be given of a first embodiment.

The present embodiment is an exemplary mechanical seal 11 which includes a seal structure applied to a compressor 1 (not wholly shown) used in a vehicle air conditioner, and an exemplary seal 101 in the seal structure. The compressor 1 according to the present embodiment uses carbon dioxide as refrigerant gas RG.

As shown in FIG. 1, the compressor 1 rotatably supports a rotating shaft 3 inside a housing 2. Internal space A filled with carbon dioxide is sealed off from external space B by the mechanical seal 11. In FIG. 1, the space on the right side is the internal space A, and the space on the left side is the external space B. The rotating shaft 3 rotates by the driving force transferred from a crankshaft of an engine via an electromagnetic clutch, to drive components in the compressor 1 (all not shown).

The mechanical seal 11 includes a mating ring 12 and a seal ring 13. The mating ring 12 is mounted on the housing 2 side so as not to rotate. The seal ring 13 is mounted on the rotating shaft 3, to rotate integrally with the rotating shaft 3. The mating ring 12 and the seal ring 13 allow the rotating shaft 3 to be inserted into openings 12a, 13a respectively formed at their central portions, and have their respective end surfaces opposed to each other.

The mating ring 12 is a slidable member which is formed of, for example, carbon. The mating ring 12 is accommodated in an annular recess 5 which is formed on the internal space A side in the housing 2 so that its diameter becomes greater than that of a shaft hole 4. The annular recess 5 is provided with an annular groove 6 which is continuous along the circumferential surface of the annular recess 5. To the annular groove 6, a ring-like housing seal 101a of the seal 101 is fitted. The housing seal 101a is closely in contact with the mating ring 12, to seal out the internal space A and the external space B from each other.

Accordingly, the mating ring 12 is fixed to the housing 2, and will not be displaced by the rotation of the rotating shaft 3.

The seal ring 13 is a slidable member which is hard and greater in Young's modulus than a slidable member formed of carbon, such as ceramic, for example, silicon carbide (SiC) or the like. The seal ring 13 is disposed on the internal space A side relative to the mating ring 12, and is a cup-like member which opens on the side opposite to the mating ring 12. The seal ring 13 is mounted so as to be axially slidable on the outer circumferential surface of the rotating shaft 3 via a ring-like shaft seal 101b. The shaft seal 101b is fitted into a greater-diameter recess 14 which is formed stepwise so that its diameter becomes greater than other part in the inner circumferential surface of the seal ring 13. Thus, the shaft seal 101b seals the rotating shaft 3.

The rotating shaft 3 includes a greater-diameter part 7 which is formed stepwise so that its diameter becomes greater than other part on the depth side in the internal space A relative to the seal ring 13. A cup-like case 15 is abutted on an end surface 7a of the greater-diameter part 7, so that the case 15 is fixed by fitting. The seal ring 13 has its end surface opposing to the case 15 joined to a retainer 16 which is a metal plate. Between the case 15 and the retainer 16, a coil spring 17 which surrounds the rotating shaft 3 is disposed in the compressed state.

Accordingly, the seal ring 13 which is axially slidable along the rotating shaft 3 via the shaft seal 101b is biased toward the mating ring 12 by the expansion force of the coil spring 17, and has its leading-end surface 18 pressed against the mating ring 12. The mating ring 12 includes an annular slidable projection 19 which projects to the position where it abuts on the leading-end surface 18 of the seal ring 13.

The leading-end surface 18 of the seal ring 13 is closely in contact with the end surface 20 of the slidable projection 19 by the surface pressure corresponding to the biasing force of the coil spring 17, to seal out the internal space A and the external space B from each other. At this time, the seal ring 13 rotates integrally with the rotating shaft 3 together with the shaft seal 101b, the case 15, the retainer 16, and the coil spring 17. Thus, in accordance with the rotation of the rotating shaft 3, the leading-end surface 18 of the seal ring 13 and the end surface 20 of the slidable projection 19 slide while maintaining the close contact state.

For the sake of convenience, the leading-end surface 18 of the seal ring 13 and the end surface 20 of the slidable projection 19 which slide while maintaining the sealing state are referred to as seal-slidable surfaces S.

The mechanical seal 11 according to the present embodiment includes two seals 101, namely, the housing seal 101a and the shaft seal 101b. The housing seal 101a is interposed between the housing 2 and the mating ring 12 to seal them up. The shaft seal 101b is interposed between the rotating shaft 3 and the seal ring 13 to seal them up.

As shown in FIG. 1, the housing seal 101a includes a resin ring 111 and a rubber cover 112. The resin ring 111 is formed of a resin material and has a ring shape whose cross-sectional shape is quadrangular. The rubber cover 112 is formed of a rubber material and covers the outer surface of the resin ring 111. The resin material of the resin ring 111 is, for example, polyether ether ketone (PEEK). The rubber material of the rubber cover 112 is, for example, fluoroelastomer (FKM).

Fluoroelastomer is higher in heat resistance than polyether ether ketone. Polyether ether ketone is higher in gas barrier function than fluoroelastomer. Accordingly, in the housing seal 101a formed of two types of materials, the material of the rubber cover 112 is superior in heat resistance to the material of the resin ring 111, and the material of the resin ring 111 is superior in gas barrier function to the material of the rubber cover 112.

The fluoroelastomer coating which is the rubber cover 112 has a constant thickness throughout the outer surfaces of the resin ring 111.

As shown in FIG. 1, the shaft seal 101b includes a resin ring 121 and a rubber cover 122. The resin ring 121 is formed of a resin material and has a ring shape whose cross-sectional shape is quadrangular. The rubber cover 122 is formed of a rubber material and covers the outer surface of the resin ring 121. The resin material of the resin ring 121 is, for example, polyether ether ketone (PEEK). The rubber material of the rubber cover 122 is, for example, fluoroelastomer (FKM).

Fluoroelastomer is higher in heat resistance than polyether ether ketone. Polyether ether ketone is higher in gas barrier function than fluoroelastomer. Accordingly, in the shaft seal 101b formed of two types of materials, the material of the rubber cover 122 is superior in heat resistance to the material of the resin ring 121, and the material of the resin ring 121 is superior in gas barrier function to the material of the rubber cover 122.

The rubber cover 122 of the shaft seal 101b is greater in terms of fluoroelastomer coating thickness than the rubber cover 112 of the housing seal 101a. Furthermore, the rubber cover 122 of the shaft seal 101b has its coating thickness varied among the surfaces of the resin ring 121, so that the thickness is greater in the region which faces the external space B than in other region. That is, the shaft seal 101b faces the external space B at a gap G between the outer circumferential surface of the rotating shaft 3 and the inner circumferential surface of the seal ring 13. Therefore, a region R which faces the gap G is "the region which faces the external space B". FIG. 1 clearly shows that the rubber thickness is smaller in the region R than in other region.

When the compressor 1 is in operation rotating its rotating shaft 3, in the refrigerant gas RG of carbon dioxide, refrigerating machine oil is blended in a mist-like manner. Part of the refrigerating machine oil enters the seal-slidable surfaces S and forms a lubricant film. The lubricant film well lubricates the seal-slidable surfaces S, and inhibits leakage of the refrigerant gas RG to external space B.

The pressure of the refrigerant gas RG sealed in the internal space A is higher than the atmospheric pressure in the external space B. Accordingly, as schematically shown in FIG. 2, the shaft seal 101b receives pressure from the right side in FIG. 2. Here, the compressor 1 has carbon dioxide sealed in the internal space A as the refrigerant gas RG. Accordingly, for example as compared to a compressor which uses CFC R134a as the refrigerant, the internal pressure of the internal space A is far higher, and thus the shaft seal 101b is required to exhibit higher gas barrier function. The gas barrier function of the shaft seal 101b is particularly critical at the region R which faces the external space B defined by the gap G between the rotating shaft 3 and the seal ring 13.

As in the present embodiment, in the compressor 1 used in a vehicle air conditioner, the rotating shaft 3 rotates at high speeds at wide open throttle. Heat generated by the sliding rotating shaft 3 raises the internal temperature of the compressor 1 to a maximum of about 210°C. Therefore, the seal 101 (the housing seal 101a, the shaft seal 101b) in the mechanical seal 11 must be excellent in heat resistance. The heat resistance in the shaft seal 101b is particularly critical at the surface which faces the internal space A, for example, the surface on the immediately left side of the arrow in FIG. 2.

Thus, the sealing member for the compressor 1 which uses carbon dioxide as the refrigerant gas RG must exhibit both the two functions, namely, the heat resistance and the gas barrier function.

In the housing seal 101a according to the present embodiment, the resin material of the resin ring 111 is polyether ether ketone (PEEK), which realizes the gas barrier function. The rubber material of the rubber cover 112 is fluoroelastomer (FKM), which secures the heat resistance.

Similarly, in the shaft seal 101b, the resin material of the resin ring 121 is polyether ether ketone (PEEK), which realizes the gas barrier function. The rubber material of the rubber cover 122 is fluoroelastomer (FKM), which secures the heat resistance.

As shown in FIG. 2, the resin ring 121 of the shaft seal 101b is locally disposed in the region R which faces the external space B defined by the gap G between the rotating shaft 3 and the seal ring 13. This further improves the gas barrier function. The surface facing the internal space A being the rubber cover 122 further improves the heat resistance.

In the present embodiment, the seals 101 (the housing seal 101a, the shaft seal 101b) are formed of the first material (fluoroelastomer) with excellent heat resistance and the second material (polyether ether ketone) with excellent gas barrier function. This improves both the heat resistance and the gas barrier function of the mechanical seal 11 without inviting an increase in size of the compressor 1.

### Second Embodiment

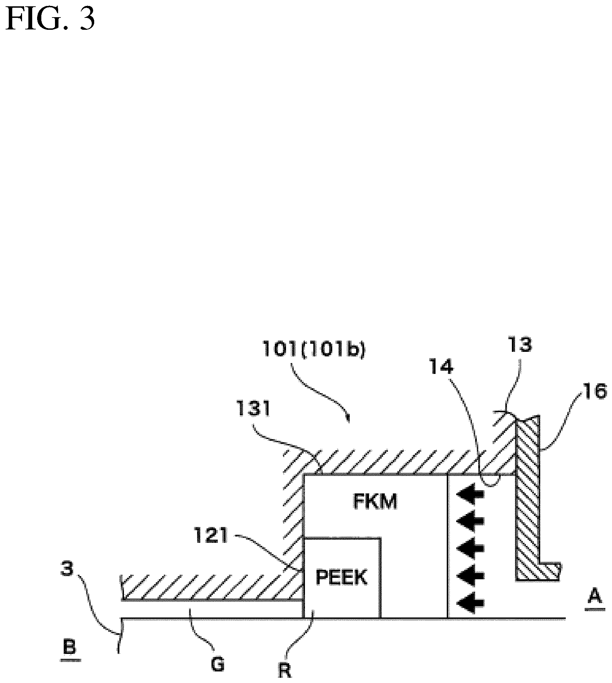

With reference to FIG. 3, a description will be given of a second embodiment. A portion identical to that in the first embodiment is denoted by an identical reference character, and the description thereof will be omitted. The second and following embodiments relate to the structure of the shaft seal 101b.

As shown in FIG. 3, the shaft seal 101b according to the present embodiment has a composite structure in which the resin ring 121 and an L-shaped rubber ring 131 are combined and joined to each other. The rubber material of the L-shaped rubber ring 131 is fluoroelastomer (FKM).

The resin ring 121 according to the present embodiment is identical to the resin ring 121 according to the first embodiment. The L-shaped rubber ring 131 has an L-shaped cross-sectional shape and, hence, is joined to the resin ring 121 instead of entirely covering the resin ring 121. Between the two sides of the L-shaped rubber ring 131 which extend perpendicularly to each other to form the L-shape, the resin ring 121 is set. The shaft seal 101b has a quadrangular cross-sectional shape.

The shaft seal 101b is mounted between the rotating shaft 3 and the greater-diameter recess 14 of the seal ring 13, so that the resin ring 121 is disposed at the region R which faces the external space B and the L-shaped rubber ring 131 is disposed at the other region. Accordingly, in the shaft seal 101b, at the surface which faces the internal space A, the L-shaped rubber ring 131 is logically disposed.

The resin material of the resin ring 121 is polyether ether ketone (PEEK), which realizes the gas barrier function. The rubber material of the L-shaped rubber ring 131 is fluoroelastomer (FKM), which secures the heat resistance.

The resin ring 121 is disposed at the region R which faces the external space B defined by the gap G between the rotating shaft 3 and the seal ring 13. This further improves the gas barrier function. The surface facing the internal space A being the L-shaped rubber ring 131 further improves the heat resistance.

In the mechanical seal 11 according to the present embodiment, the seals 101 (the housing seal 101a, the shaft seal 101b) are formed of the first material (fluoroelastomer) with excellent heat resistance and the second material (polyether ether ketone) with excellent gas barrier function. This improves both the heat resistance and the gas barrier function of the mechanical seal 11 without inviting an increase in size of the compressor 1.

### Third Embodiment

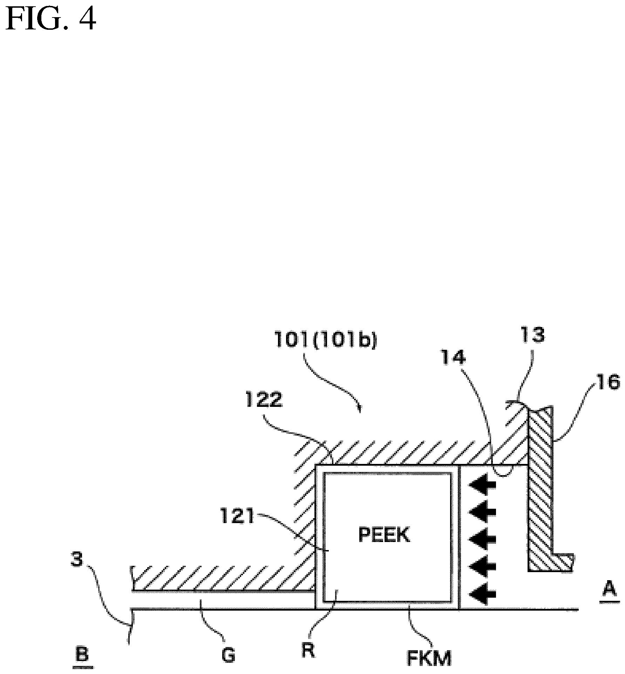

With reference to FIG. 4, a description will be given of a third embodiment. A portion identical to that in the first embodiment is denoted by an identical reference character, and the description thereof will be omitted.

As shown in FIG. 4, the shaft seal 101b according to the present embodiment includes the ring-like resin ring 121 which is formed of a resin material and has a quadrangular cross-sectional shape, and the rubber cover 122 which is formed of a rubber material and covers the outer surface of the resin ring 121. The resin material of the resin ring 121 is, for example, polyether ether ketone (PEEK). The rubber material of the rubber cover 122 is, for example, fluoroelastomer (FKM).

The fluoroelastomer coating which is the rubber cover 122 has a constant thickness throughout the outer surfaces of the resin ring 121. The rubber cover 122 has a thickness which is enough to allow the resin ring 121 to be disposed at the region R which faces the external space B defined by the gap G between the rotating shaft 3 and the seal ring 13.

The resin material of the resin ring 121 is polyether ether ketone (PEEK), which realizes the gas barrier function. The rubber material of the rubber cover 122 is fluoroelastomer (FKM), which secures the heat resistance.

The resin ring 121 is disposed at the region R which faces the external space B defined by the gap G between the rotating shaft 3 and the seal ring 13. This further improves the gas barrier function. The surface facing the internal space A being the rubber cover 122 further improves the heat resistance.

In the mechanical seal 11 according to the present embodiment, the seals 101 (the housing seal 101a, the shaft seal 101b) are formed of the first material (fluoroelastomer) with excellent heat resistance and the second material (polyether ether ketone) with excellent gas barrier function. This improves both the heat resistance and the gas barrier function of the mechanical seal 11 without inviting an increase in size of the compressor 1.

In contrast to the first and second embodiments, according to the present embodiment, the orientation in mounting the shaft seal 101b is not specified. In the first and second embodiments, the orientation in mounting the shaft seal 101b is determined so that the resin ring 121 is disposed at the region R which faces the external space B. On the other hand, the shaft seal 101b according to the present embodiment has axial symmetry and, hence, the orientation in mounting is not specified. This improves the workability in mounting the shaft seal 101b.

### Fourth Embodiment

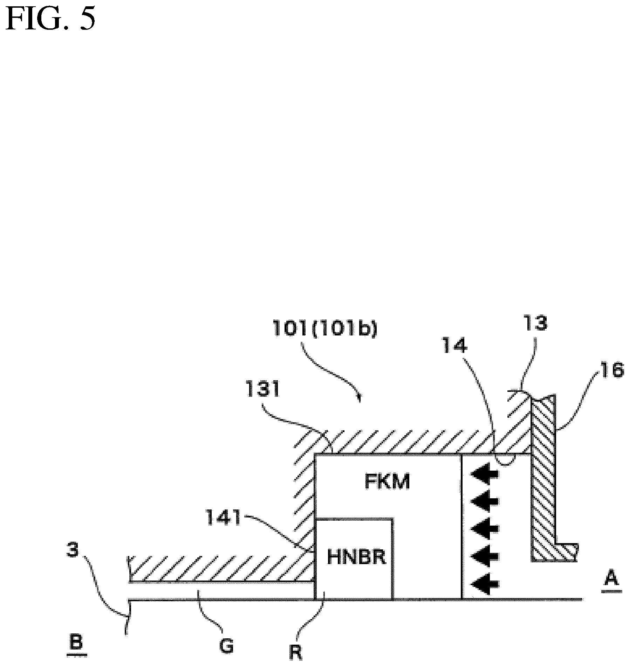

With reference to FIG. 5, a description will be given of a fourth embodiment. A portion identical to that in the first embodiment is denoted by an identical reference character, and the description thereof will be omitted.

As shown in FIG. 5, the shaft seal 101b according to the present embodiment has a composite structure in which a rubber ring 141 and the L-shaped rubber ring 131 are combined and joined to each other. The rubber material of the L-shaped rubber ring 131 is fluoroelastomer (FKM). The rubber material of the rubber ring 141 is hydrogenated nitrile butadiene rubber (HNBR).

Fluoroelastomer is higher in heat resistance than hydrogenated nitrile butadiene rubber. Hydrogenated nitrile butadiene rubber is higher in gas barrier function than fluoroelastomer. Accordingly, in the shaft seal 101b formed of two types of materials, the material of the L-shaped rubber ring 131 is superior in heat resistance to the material of the rubber ring 141, and the material of the rubber ring 141 is superior in gas barrier function to the material of the L-shaped rubber ring 131.

The rubber ring 141 is identical in shape and size to the resin ring 121 according to the second embodiment. The L-shaped rubber ring 131 has an L-shaped cross-sectional shape and, hence, is joined to the rubber ring 141 instead of entirely covering the rubber ring 141. Between the two sides of the L-shaped rubber ring 131 which extend perpendicularly to each other to form the L-shape, the rubber ring 141 is set. The shaft seal 101b has a quadrangular cross-sectional shape.

The shaft seal 101b is mounted between the rotating shaft 3 and the greater-diameter recess 14 of the seal ring 13, so that the rubber ring 141 is disposed at the region R which faces the external space B, and the L-shaped rubber ring 131 is disposed at the other region. Accordingly, in the shaft seal 101b, at the surface which faces the internal space A, the L-shaped rubber ring 131 is logically disposed.

The rubber material of the rubber ring 141 is hydrogenated nitrile butadiene rubber (HNBR), which realizes the gas barrier function. The rubber material of the L-shaped rubber ring 131 is fluoroelastomer (FKM), which secures the heat resistance.

The rubber ring 141 formed of hydrogenated nitrile butadiene rubber (HNBR) is disposed at the region R which faces the external space B defined by the gap G between the rotating shaft 3 and the seal ring 13. This further improves the gas barrier function. The surface facing the internal space A being the L-shaped rubber ring 131 formed of fluoroelastomer (FKM) further improves the heat resistance.

In the mechanical seal 11 according to the present embodiment, the shaft seal 101b is formed of the first material (fluoroelastomer) with excellent heat resistance and the second material (hydrogenated nitrile butadiene rubber) with excellent gas barrier function. This improves both the heat resistance and the gas barrier function of the mechanical seal 11 without inviting an increase in size of the compressor 1.

### Fifth Embodiment

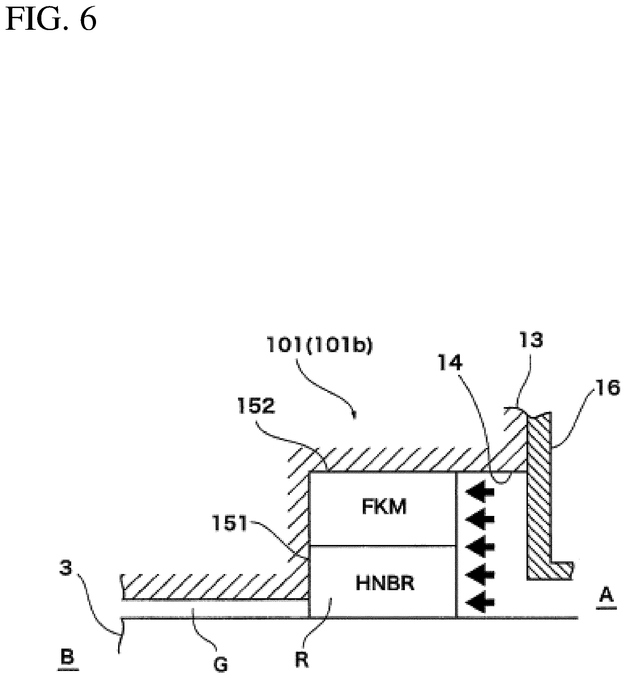

With reference to FIG. 6, a description will be given of a fifth embodiment. A portion identical to that in the first embodiment is denoted by an identical reference character, and the description thereof will be omitted.

As shown in FIG. 6, the shaft seal 101b according to the present embodiment has a composite structure in which an inner circumferential rubber ring 151 and an outer circumferential rubber ring 152 are combined and joined to each other. The rubber material of the inner circumferential rubber ring 151 is hydrogenated nitrile butadiene rubber (HNBR). The rubber material of the outer circumferential rubber ring 152 is fluoroelastomer (FKM).

Fluoroelastomer is higher in heat resistance than hydrogenated nitrile butadiene rubber. Hydrogenated nitrile butadiene rubber is higher in gas barrier function than fluoroelastomer. Accordingly, in the shaft seal 101b formed of two types of materials, the material of the outer circumferential rubber ring 152 is superior in heat resistance to the material of the inner circumferential rubber ring 151, and the material of the inner circumferential rubber ring 151 is superior in gas barrier function to the material of the outer circumferential rubber ring 152.

The inner circumferential rubber ring 151 is disposed on the inner circumferential side, and the outer circumferential rubber ring 152 is disposed on the outer circumferential side. The inner circumferential rubber ring 151 and the outer circumferential rubber ring 152 are joined to each other.

The shaft seal 101b is mounted between the rotating shaft 3 and the greater-diameter recess 14 of the seal ring 13. At the region R which faces the external space B defined by the gap G between the rotating shaft 3 and the seal ring 13, the inner circumferential rubber ring 151 is disposed.

The rubber material of the inner circumferential rubber ring 151 is hydrogenated nitrile butadiene rubber (HNBR), which realizes the gas barrier function. The rubber material of the outer circumferential rubber ring 152 is fluoroelastomer (FKM), which secures the heat resistance.

The inner circumferential rubber ring 151 is disposed at the region R which faces the external space B defined by the gap G between the rotating shaft 3 and the seal ring 13. This further improves the gas barrier function.

In the mechanical seal 11 according to the present embodiment, the shaft seal 101b is formed of the first material (fluoroelastomer) with excellent heat resistance and the second material (hydrogenated nitrile butadiene rubber) with excellent gas barrier function. This improves both the heat resistance and the gas barrier function of the mechanical seal 11 without inviting an increase in size of the compressor 1.

In contrast to the first, second, and fourth embodiments, according to the present embodiment, the orientation in mounting the shaft seal 101b is not specified. In the first, second, and fourth embodiments, the orientation in mounting the shaft seal 101b is determined so that the resin ring 121 or the rubber ring 141 is disposed at the region R which faces the external space B. On the other hand, the shaft seal 101b according to the present embodiment has axial symmetry and, hence, the orientation in mounting is not specified. This improves the workability in mounting the shaft seal 101b.

In carrying out the invention, various modifications and changes may be made.

For example, in the embodiments, while the mating ring 12 is a slidable member formed of carbon, the mating ring 12 may be other self-lubricating slidable member formed of PTFE or polyimide. Without being specified to silicon carbide (SiOC) employed in the embodiments, the material of the seal ring 13 may be ceramic such as alumina (Al₂O₃) or cemented carbide.

In the embodiments, the housing seal 101a and the shaft seal 101b have exemplarily a quadrangular cross-sectional shape. In carrying out the invention, the shape of the members is not specified to such a shape, and may be any of various shapes including a circular cross-sectional shape and a polygonal cross-sectional shape.

In addition to the foregoing, any modifications or changes are permitted.

### Reference Signs List

- 1: compressor
- 2: housing
- 3: rotating shaft
- 4: shaft hole
- 5: annular recess
- 6: annular groove
- 7: greater-diameter part
- 7a: end surface
- 11: mechanical seal
- 12: mating ring
- 12a: opening
- 13: seal ring
- 13a: opening
- 14: greater-diameter recess
- 15: case
- 16: retainer
- 17: coil spring
- 18: leading-end surface
- 19: slidable projection
- 20: end surface
- 101: seal
- 101a: housing seal
- 101b: shaft seal
- 111: resin ring
- 112: rubber cover
- 121: resin ring
- 122: rubber cover
- 131: L-shaped rubber ring
- 141: rubber ring
- 151: inner circumferential rubber ring
- 152: outer circumferential rubber ring
- A: internal space
- B: external space
- G: gap
- R: region
- S: seal-slidable surface

## Claims

1. A seal having a ring-like shape and configured to seal off internal space under a pressure of carbon dioxide gas from external space, wherein
the seal is a single structure being a combination of a first material and a second material,
the first material is superior in heat resistance to the second material, and
the second material is superior in gas barrier function to the first material.

2. The seal according to claim 1, wherein
the second material has a ring-like shape, and
the first material covers the second material so that a thickness of the first material is smaller in a region facing the external space than in other region.

3. The seal according to claim 1, wherein
the second material has a ring-like shape and disposed at a region facing the external space, and
the first material has a ring-like shape having an L-shaped cross-sectional shape, and joined to the second material.

4. The seal according to claim 1, wherein
the second material has a ring-like shape, and
the first material covers an entire circumference of the second material by a constant thickness.

5. The seal according to claim 1, wherein
the second material has a ring-like shape, and extends across a region facing the external space and a region facing the internal space, and
the first material has a ring-like shape, and joined to an outer circumference of the second material.

6. The seal according to any one of claims 1 to 5, wherein
the first material is fluoroelastomer, and
the second material is resin.

7. The seal according to any one of claims 1 to 5, wherein
the first material is fluoroelastomer, and
the second material is hydrogenated nitrile butadiene rubber.

8. A seal structure used in a compressor including a rotating shaft, comprising:
a housing;
a mating ring fixed to the housing;
a seal ring abutting on the mating ring; and
the seal according to any one of claims 1 to 7 disposed between the housing and the mating ring or between the seal ring and the rotating shaft.
